# EUROPÄISCHE PATENTANMELDUNG

(11) **EP 4 644 065 A1**
(43) Veröffentlichungstag der Anmeldung: **05.11.2025**
(21) Anmeldenummer: 24173414.4
(22) Anmeldetag: 30.04.2024
(51) Int. Cl.: B25J 15/06, B25J 15/00

(54) **SAUGGREIFER MIT HUBKOLBEN UND SELBSTTÄTIG SCHLIESSENDER VENTILVORRICHTUNG**

(71) Anmelder: J. Schmalz GmbH, 72293 Glatten (DE)
(72) Erfinder: Stockburger, Ralf, 72293 Glatten (DE)
(74) Vertreter: DREISS Patentanwälte PartG mbB

(57) **Zusammenfassung**

Die Erfindung betrifft einen Sauggreifer (10), umfassend einen Greifergrundkörper (12), einen Unterdruckanschluss (28) und wenigstens eine Greifeinheit (14), umfassend einen Hubkolben und eine mit dem Hubkolben bewegungsgekoppelte Saugereinrichtung (18) mit wenigstens einer Saugstelle (36), wobei die Saugereinrichtung durch den Hubkolben hindurch mit Unterdruck versorgbar ist, wobei der Hubkolben entlang einer Hubachse (20) zwischen einer axial eingefahrenen Passivkonfiguration und einer axial ausgefahrenen Aktivkonfiguration verstellbar ist, wobei die Greifeinheit eine Absperreinrichtung zum Absperren und Freigeben eines Strömungswegs zwischen dem Unterdruckanschluss und der Saugereinrichtung aufweist, wobei die Greifeinheit wenigstens eine Ventilvorrichtung aufweist, welche in einem Strömungsweg zwischen der wenigstens einen Saugstelle und dem Unterdruckanschluss angeordnet ist und welche dazu ausgebildet ist, bei freiem Ansaugen mit unbelegter wenigstens einer Saugstelleselbsttätig zu schließen und somit den Strömungsweg zwischen der wenigstens einen Saugstelle und dem Unterdruckanschluss zu blockieren.

## Beschreibung

Die Erfindung betrifft einen Sauggreifer, umfassend einen Greifergrundkörper und wenigstens eine daran gehalterte Greifeinheit mit einem Hubkolben und einer mit dem Hubkolben bewegungsgekoppelten Saugereinrichtung. Die Erfindung betrifft auch ein Greifmodul mit einer Mehrzahl von solchen Sauggreifern.

Derartige Sauggreifer sind aus dem Stand der Technik bekannt. Die Hubkolben sind dabei üblicherweise zwischen einer axial eingefahrenen Passivkonfiguration und einer axial ausgefahrenen Aktivkonfiguration relativ zu dem Greifergrundkörper verstellbar, wobei in der Passivkonfiguration eine Unterdruckversorgung der Saugereinrichtung abgesperrt ist und in der Aktivkonfiguration freigegeben ist. Insofern ist durch Ausfahren des Hubkolbens die Saugereinrichtung aktivierbar.

Bei solchen Sauggreifern ist es möglich, durch selektives Ausfahren einzelner Saugereinheiten den Sauggreifer an unterschiedliche Geometrien zu greifender Gegenstände flexibel anzupassen. Dadurch, dass die Saugereinheit in der Aktivkonfiguration relativ zu der Passivkonfiguration ausgefahren sind, bilden die passiven Sauggreifer keine Störkontur beim Greifen eines Gegenstands.

Die Erfindung beschäftigt sich mit der Aufgabe, Sauggreifer der eingangs genannten Art zu verbessern. Insbesondere sollen auch Gegenstände mit unregelmäßiger Form und/oder unterschiedlicher Größe auf konstruktiv einfache Weise zuverlässig und energieeffizient gegriffen werden können.

Diese Aufgabe wird erfindungsgemäß durch einen Sauggreifer mit den Merkmalen des Anspruchs 1 gelöst. Der Sauggreifer ist zum Ansaugen und Handhaben eines Gegenstands, insbesondere Flachmaterials, weiter insbesondere Blechs, ausgebildet. Der Sauggreifer ist eine Sauggreifvorrichtung.

Der Sauggreifer umfasst einen Greifergrundkörper, einen Unterdruckanschluss zum Anschluss an eine insbesondere externe Unterdruckversorgung und wenigstens eine an dem Greifergrundkörper gehalterte Greifeinheit, vorzugsweise mehrere Greifeinheiten. Der Unterdruckanschluss ist vorzugsweise an dem Greifergrundkörper vorgesehen. Der Greifergrundkörper kann außerdem ein Unterdruckverteilersystem zum Verteilen von Unterdruck von dem Unterdruckanschluss auf die wenigstens eine Greifeinheit aufweisen.

Die Greifeinheit (bei mehreren Greifeinheiten jede Greifeinheit) umfasst einen Hubkolben und eine mit dem Hubkolben bewegungsgekoppelte, insbesondere an dem Hubkolben gehalterte, Saugereinrichtung zum Ansaugen und somit Greifen eines Gegenstands. Der Hubkolben ist, insbesondere druckluftbetätigt, entlang einer Hubachse zwischen einer axial eingefahrenen Passivkonfiguration und einer axial ausgefahrenen Aktivkonfiguration relativ zu dem Greifergrundkörper verstellbar. Insbesondere ist der Hubkolben in einer Ausfahrrichtung und in einer zu der Ausfahrrichtung entgegengesetzten Einfahrrichtung relativ zu dem Greifergrundkörper verstellbar. Die eingefahrene Konfiguration und die ausgefahrene Konfiguration des Hubkolbens bilden insbesondere Endstellungen eines Verschiebewegs des Hubkolbens entlang der Hubachse.

Die Saugereinrichtung weist wenigstens eine Saugstelle zum Ansaugen eines zu greifenden Gegenstands auf. Die Saugereinrichtung ist durch den Hubkolben hindurch mit Unterdruck versorgbar. Insbesondere weist der Hubkolben einen Unterdruckkanal auf, über welchen die Saugereinrichtung mit Unterdruck versorgbar ist. Vorzugsweise mündet der Unterdruckkanal an dem freien Ende des Hubkolbens aus.

Die Greifeinheit weist eine Absperreinrichtung zum Absperren und Freigeben eines Strömungswegs zwischen dem Unterdruckanschluss und der Saugereinrichtung auf. Die Absperreinrichtung kann eine Sperrkonfiguration einnehmen, in welcher der Strömungsweg zwischen dem Unterdruckanschluss und der Saugereinrichtung abgesperrt ist, und eine Freigabekonfiguration, in welcher der Strömungsweg freigegeben ist. Die Absperreinrichtung ist derart ausgebildet, dass sie in der Passivkonfiguration des Hubkolbens die Sperrkonfiguration einnimmt (also den Strömungsweg absperrt) und in der Aktivkonfiguration des Hubkolbens die Freigabekonfiguration einnimmt (also den Strömungsweg freigibt). Insbesondere ist die Absperreinrichtung derart ausgebildet, dass sie durch Ausfahren des Hubkolbens aus der Passivkonfiguration in die Aktivkonfiguration in die Freigabekonfiguration überführt wird. Die Absperreinrichtung kann derart ausgebildet sein, dass sie in der Passivkonfiguration eine Strömungsverbindung zwischen dem Unterdruckanschluss und dem Unterdruckkanal des Hubkolbens absperrt und in der Aktivkonfiguration diese Strömungsverbindung freigibt. Die Absperreinrichtung kann beispielsweise durch eine mit dem Hubkolben bewegungsgekoppelte, insbesondere an einem der Saugereinrichtung gegenüberliegenden Ende des Hubkolbens angeordnete, Dichteinrichtung bereitgestellt sein, welche in der Passivkonfiguration eine Unterdruckversorgungsöffnung zur Versorgung des im Hubkolben vorgesehenen Unterdruckkanals abdichtet und in der Aktivkonfiguration die Unterdruckversorgungsöffnung freigibt.

Erfindungsgemäß weist die Greifeinheit zusätzlich zu der Absperreinrichtung wenigstens eine von der Absperreinrichtung verschiedene Ventilvorrichtung auf, welche im Strömungsweg zwischen der wenigstens einen Saugstelle, insbesondere der Saugereinrichtung, und dem Unterdruckanschluss angeordnet ist. Vorzugsweise ist die Ventilvorrichtung, in Bezug auf eine Ansaugströmung von der wenigstens einen Saugstelle zu dem Unterdruckanschluss, stromaufwärts der Absperreinrichtung angeordnet. Die wenigstens eine Ventilvorrichtung ist dazu ausgebildet, bei freiem Ansaugen mit unbelegter wenigstens einer Saugstelle (d.h. bei Hubkolben in Aktivkonfiguration / Absperreinrichtung in Freigabekonfiguration und ohne, dass ein Gegenstand an der wenigstens einen Saugstelle angesaugt ist) selbsttätig (automatisch), insbesondere durch den sich einstellenden Ansaugluftstrom, zu schließen und somit den Strömungsweg zwischen der wenigstens einen Saugstelle und dem Unterdruckanschluss zu begrenzen bzw. zu limitieren. Im vorliegenden Zusammenhang kann "begrenzen" ein vollständiges Absperren des Strömungswegs oder ein zumindest teilweise Absperren des Strömungswegs umfassen. Insofern ist mit "Schließen" der Ventilvorrichtung nicht zwingend ein vollständiges Unterbinden einer Ansaugströmung gemeint, sondern umfasst optional auch ein Reduzieren der Ansaugströmung gegenüber dem freien Ansaugen. Die Ventilvorrichtung ist insbesondere dazu ausgebildet, bei belegter wenigstens einer Saugstelle (d.h. wenn ein Gegenstand an der wenigstens einen Saugstelle angesaugt ist) selbsttätig (automatisch) zu öffnen und somit den Strömungsweg zwischen der Saugereinrichtung und dem Unterdruckanschluss freizugeben.

Eine solche Ausgestaltung mit selbsttätig schießender Ventilvorrichtung ermöglicht es, auf konstruktiv einfache Weise aktivierte, aber nicht belegte Saugstellen zu schließen und somit eine Leckage zu reduzieren. Dies ist insbesondere beim Greifen von unregelmäßig geformten Gegenständen und/oder beim Greifen von Gegenständen mit einer Mehrzahl von Aussparungen von Vorteil. Bei solchen Gegenständen kann es aufgrund der üblicherweise fest vorgegebenen Saugstellenanordnung vorkommen, dass eine oder mehrere Saugstellen nicht oder nicht richtig treffen (bspw., weil sie über eine Aussparung des Gegenstands angeordnet sind). Diese Saugstellen können dann über die Ventilvorrichtung automatisch geschlossen werden oder zumindest eine Saugströmung reduziert werden, was einen energieeffizienten Betrieb des Sauggreifers begünstigt. Ebenso ermöglicht die vorgeschlagene Ausgestaltung Gegenstände mit vergleichsweise geringen Abmessungen sicher und energieeffizient zu greifen.

Im Rahmen einer vorteilhaften Weiterbildung kann die Ventilvorrichtung derart ausgebildet sein, dass sie auch dann selbsttätig schließt, wenn die wenigstens eine Saugstelle abschnittsweise (aber nicht vollständig) belegt ist. Insbesondere stellt die Saugereinrichtung einen Saugquerschnitt, insbesondere Saugfläche, bereit, wobei die Ventilvorrichtung derart ausgebildet ist, dass sie bereits bei nur teilweise freiem Saugquerschnitt, insbesondere Saugfläche, selbsttätig schließt. Insofern kann das Risiko, dass ein Gegenstand nicht zuverlässig gegriffen wird, reduziert werden.

Die wenigstens eine Ventilvorrichtung kann an verschiedenen Position entlang des Strömungswegs von der wenigstens einen Saugstelle zu dem Unterdruckanschluss angeordnet sein. Vorzugsweise ist die wenigstens eine Ventilvorrichtung in einem Strömungsweg zwischen der wenigstens einen Saugstelle, insbesondere der Saugereinrichtung, und dem Hubkolben angeordnet. Insofern ist die wenigstens eine Ventilvorrichtung vorzugsweise stromaufwärts - in Bezug auf eine Ansaugströmung von der wenigstens einen Saugstelle zu dem Unterdruckanschluss - der Absperreinrichtung angeordnet. Eine solche Ausgestaltung in der Nähe der wenigstens einen Saugstelle begünstigt ein schnelles und zuverlässiges Schalten der Ventilvorrichtung.

Im Rahmen einer vorteilhaften Weiterbildung weist die Saugereinrichtung eine Mehrzahl von, insbesondere fluidisch parallel geschalteten, Saugstellen auf. Insbesondere weist die Saugereinrichtung eine Mehrzahl von Saugkörpern, bspw. Elastomersaugkörpern, auf, welche jeweils eine Saugstelle bereitstellen. Die Saugkörper einer Saugereinrichtung können unterschiedlich ausgebildet sein, insbesondere einen unterschiedlich großen Saugquerschnitt bereitstellen. Es ist auch denkbar, dass die Saugkörper einer jeweiligen Saugereinrichtung zueinander identisch ausgebildet sind. Bei Vorsehen von mehreren Greifeinheiten können die Greifeinheiten unterschiedliche und/oder verschieden große Saugkörper aufweisen.

Bei einer Ausgestaltung mit einer Mehrzahl an Saugstellen, insbesondere Saugkörpern, kann einer Teilmenge der Saugstellen, insbesondere Saugkörpern, vorzugsweise allen Saugstellen, insbesondere allen Saugkörpern, einer jeweiligen Saugereinrichtung eine gemeinsames Ventilvorrichtung zugeordnet sein. Insofern können die Saugstellen der Saugereinrichtung bei freiem Ansaugen gemeinsam durch eine Ventilvorrichtung geschlossen werden. Eine solche Ausgestaltung ist konstruktiv einfach und kompakt aufgebaut. Insbesondere können die Saugstellen, insbesondere Saugkörper, einer Saugereinrichtung mit der gleichen Ventilvorrichtung in Reihe geschaltet sein.

Alternativ ist es denkbar, dass jeder Saugstelle, insbesondere jedem Saugkörper, einer Saugereinrichtung eine eigene Ventilvorrichtung zugeordnet ist. Dies ermöglicht es, aktivierte, aber nicht belegte Saugstellen der Saugereinrichtung selektiv abzuschalten. Dies ist beispielsweise beim Greifen von Gegenständen mit Aussparungen, bspw. Blechen mit größeren Durchgangslöchern, von Vorteil, wobei es vorkommen kann, dass nur eine Teilmenge der Saugstellen einer Saugereinrichtung den Gegenstand tatsächlich ansaugen. Darüber hinaus ermöglicht es eine solche Ausgestaltung auch filigrane Bauteile, die bspw. nur eine Teilmenge der an der Saugereinrichtung vorgesehenen Saugkörper belegen, zuverlässig und energieeffizient zu greifen.

Im Rahmen einer vorteilhaften Weiterbildung weist die Saugereinrichtung ein Gehäuse auf, welches an dem Hubkolben gehaltert ist. Vorzugsweise weist das Gehäuse an einer dem Hubkolben abgewandten Seite einen Saugeraufnahmeraum für den wenigstens einen Saugkörper auf. Der wenigstens eine Saugkörper kann insbesondere derart in dem Saugeraufnahmeraum aufgenommen sein, dass der Saugkörper (in einer Ausgangskonfiguration, in welcher kein Gegenstand angesaugt ist) mit einer Anlagefläche zur Anlage an einen zu greifenden Gegenstand über eine den Aufnahmeraum begrenzende Wandung des Gehäuses axial entlang der Hubachse hervorsteht. Die Wandung des Gehäuses kann eine Anlagefläche für den zu greifenden Gegenstand bilden.

Vorzugsweise weist das Gehäuse außerdem einen, insbesondere zwischen dem Saugeraufnahmeraum und dem Hubkolben angeordneten, Ventilaufnahmeraum auf, in welchem die wenigstens eine Ventilvorrichtung angeordnet ist. Die wenigstens eine Ventilvorrichtung ist insofern vor Umwelteinflüssen geschützt. Darüber hinaus ist es denkbar, dass das Gehäuse einen Strömungskanal zwischen dem wenigstens einen Saugkörper und der wenigstens einen Ventilvorrichtung begrenzt.

Die Ventilvorrichtung kann unterschiedlich ausgebildet sein. Beispielsweise kann die Ventilvorrichtung ein Ventilgehäuse aufweisen, welches einen Ventilinnenraum begrenzt. In dem Ventilinnenraum sind vorzugsweise ein Dichtabschnitt und wenigstens ein Dichtsitz angeordnet. Der Dichtabschnitt und der Dichtsitz sind dabei derart ausgebildet, dass bei Anliegen des Dichtabschnitts am Dichtsitz der Strömungsweg der der Ventilvorrichtung zugeordneten wenigstens einen Saugstelle und dem Unterdruckanschluss unterbrochen ist. Der Dichtabschnitt ist dabei derart ausgebildet, insbesondere im Ventilgehäuse derart verlagerbar, dass er bei freiem Ansaugen mit unbelegter wenigstens einer Saugstelle durch den Ansaugluftstrom gegen den Dichtsitz gedrückt wird und somit in Anlage mit dem Dichtsitz geführt wird (Schließstellung der Ventilvorrichtung). Der Dichtabschnitt kann insofern eine Schließstellung einnehmen, in welcher der Dichtabschnitt an dem Dichtsitz anliegt. Der Dichtabschnitt kann vorzugsweise eine Freigabestellung einnehmen, in welcher der Dichtabschnitt von dem Dichtsitz beabstandet ist, sodass der Strömungsweg zwischen der wenigstens einen Saugstelle und dem Unterdruckanschluss freigegeben ist. Der Dichtabschnitt kann durch einen Ventilkörper bereitgestellt sein, welcher in dem Ventilgehäuse zwischen der Freigabestellung und der Schließstellung verlagerbar ist. Der Dichtabschnitt kann auch durch einen Abschnitt einer flexibel verformbaren Wandung oder Membran bereitgestellt sein.

Im Rahmen einer besonders vorteilhaften Realisierungsform kann die Ventilvorrichtung ein Ventilgehäuse aufweisen, welches einen Ventilinnenraum definiert. Das Ventilgehäuse weist, insbesondere an einer dem Hubkolben zugewandten ersten Seite, eine Unterdrucköffnung auf, welche mit dem Unterdruckanschluss, insbesondere mit einem Unterdruckkanal des Hubkolbens, in Strömungsverbindung steht. Die Unterdrucköffnung mündet in den Ventilinnenraum ein. Das Ventilgehäuse weist außerdem, insbesondere an einer gegenüberliegenden, der Saugereinrichtung zugewandten zweiten Stirnseite, eine Saugöffnung auf, welche mit der wenigstens einen Saugstelle, welche der Ventilvorrichtung zugeordnet ist, insbesondere der Saugereinrichtung, in Strömungsverbindung steht. Die Saugöffnung mündet in den Ventilinnenraum ein.

Die Ventilvorrichtung weist außerdem eine flexible Trennwandung oder Membran auf, welche derart in dem Ventilinnenraum verläuft, dass einerseits der flexiblen Trennwandung ein Steuerraum in dem Ventilinnenraum definiert ist, und dass andererseits der flexiblen Trennwandung ein Saugraum definiert ist. Insbesondere unterteilt die Trennwandung den Ventilinnenraum in einen Steuerraum und einen Saugraum. Der Steuerraum ist mit dem Unterdruckeinlass verbunden. Der Saugraum ist mit der Saugöffnung verbunden.

Die flexible Trennwandung weist einen Drosseldurchgang derart auf, dass ein Strömungsweg von der Saugöffnung bzw. dem Saugraum durch den Drosseldurchgang in den Steuerraum hinein und weiter von dem Steuerraum durch die Unterdrucköffnung bereitgestellt wird. Insbesondere verläuft der Strömungsweg durch den Steuerraum hindurch.

Der Drosseldurchgang ist dabei derart ausgebildet, dass ein Strömungswiderstand für Strömungen durch den Drosseldurchgang derart definiert ist, dass sich bei freiem Ansaugen mit unbelegter wenigstens einer Saugstelle - aufgrund des Strömungswiderstandes durch den Drosseldurchgang - in dem Steuerraum ein Unterdruck gegenüber dem Saugraum einstellt.

Die flexible Trennwandung ist derart ausgebildet, dass sie aufgrund des Unterdrucks, welcher sich bei freiem Ansaugen in dem Steuerraum einstellt, verformt und zwar derart, dass sich das Volumen des Steuerraums unter Einfluss des Unterdrucks verkleinert. Unter freiem Ansaugen wird im vorliegenden Zusammenhang verstanden, dass ein Ansaugen bei unbelegter wenigstens einer Saugstelle der Saugereinrichtung erfolgt. Es stellt sich dann eine Strömung entlang des Strömungsweges von der Saugereinrichtung durch die Saugöffnung, den Saugraum, den Drosseldurchgang, den Steuerraum und die Unterdrucköffnung bis zum Unterdruckanschluss ein. Diese Strömung wird getrieben durch die Unterdruckversorgung, welche durch die Unterdrucköffnung mit dem Steuerraum verbunden ist. Da bei freiem Ansaugen zunächst eine hohe Strömung bzw. Stromdichte entlang des Strömungsweges vorliegt, stellt sich aufgrund des Strömungswiderstandes im Drosseldurchgang ein Unterdruck im Steuerraum gegenüber dem Saugraum ein. Der Unterdruck führt zu einer Kompression des Steuerraums unter Verformung der flexiblen Trennwandung.

An der Trennwandung ist ein, insbesondere den Drosseldurchgang umgebender, Dichtabschnitt, insbesondere in Form eines in das Innere des Steuerraums hineinragenden Dichtvorsprungs vorgesehen, wobei innerhalb des Steuerraumes ein zugehöriger Dichtsitz für den Dichtabschnitt vorgesehen ist. Der Dichtabschnitt und der Dichtsitz sind vorzugsweise derart angeordnet, dass bei Verformung der flexiblen Trennwandung bei freiem Ansaugen mit unbelegter wenigstens einer Saugstelle der Dichtabschnitt an den Dichtsitz zum Anliegen kommt. Der Dichtabschnitt und der Dichtsitz sind dabei vorzugsweise derart ausgebildet, dass bei Anliegen des Dichtvorsprungs am Dichtsitz der Strömungsweg zwischen Saugereinrichtung und Unterdruckanschluss, insbesondere der Strömungsweg durch den Drosseldurchgang in den Steuerraum hinein, unterbrochen ist, wobei die Unterbrechung innerhalb des Steuerraums erfolgt.

Dadurch wird der Dichtvorsprung an den Dichtsitz zum Anliegen gebracht und die Ventilvorrichtung geschlossen. Da der Steuerraum weiterhin von der Unterdruckversorgung mit Unterdruck beaufschlagt wird, wird der im Steuerraum gegenüber der Saugseite vorliegende Unterdruck aufrechterhalten und die Ventilvorrichtung bleibt geschlossen. Insofern wird der Unterdruck, der sich aufgrund des Strömungswiderstandes im Drosseldurchgang bei einer ausreichend großen Strömung entlang des Strömungsweges in dem Steuerraum gegenüber dem Saugraum einstellt, dazu genutzt, die flexible Trennwandung zu verformen. Die Verformung der flexiblen Trennwandung wird dann dazu ausgenutzt, die Ventilvorrichtung zu schließen. Dadurch wird die gewünschte Funktion eines selbsttätig schließenden Ventils erzielt.

Besonders vorteilhaft ist es, wenn der Drosseldurchgang als Kanal ausgebildet ist, der sich durch die flexible Trennwandung erstreckt und mit einer Mündungsöffnung in den Steuerraum einmündet, und wobei Dichtabschnitt und Dichtsitz derart angeordnet sind, dass bei Anliegen des Dichtabschnitts an dem Dichtsitz die Mündungsöffnung innerhalb des Steuerraums geschlossen ist.

Der Dichtvorsprung kann von einem die Mündungsöffnung umgebenden Wulst gebildet sein.

Die flexible Trennwandung kann derart ausgebildet und angeordnet sein, dass sie bistabil in eine erste Konfiguration und in eine zweite Konfiguration schnappen kann, wobei in der ersten Konfiguration der Dichtvorsprung an dem Dichtsitz anliegt und in der zweiten Konfiguration der Dichtvorsprung von dem Dichtsitz beabstandet ist.

Das Aus- und Einfahren des Hubkolbens einer jeweiligen Greifeinheit kann grundsätzlich auf verschiedene Art und Weise erfolgen. Vorzugsweise ist der Hubkolben druckbetätigt, insbesondere druckluftbetätigt, aus der eingefahrenen Konfiguration in die ausgefahrene Konfiguration überführbar. Insofern kann der Hubkolben durch Beaufschlagen eines entlang der Hubachse wirkenden Druckes (Unterdruck oder Überdruck) entlang der Hubachse verstellbar sein.

Besonders bevorzugt sind Ausgestaltungen, bei denen der Hubkolben durch Beaufschlagung mit Druckluft in Ausfahrrichtung verlagerbar ist, insbesondere ausgehend von der eingefahrenen Passivkonfiguration in die ausgefahrene Aktivkonfiguration überführbar ist. Im Rahmen einer beispielhaften Realisierungsform kann der Sauggreifer, insbesondere am Greifergrundkörper, einen Druckluftanschluss und ein Druckluftverteilersystem zum Verteilen von Druckluft auf die wenigstens eine Greifeinheit aufweisen.

Im Rahmen einer vorteilhaften Weiterbildung kann der Sauggreifer außerdem, insbesondere als Teil des Druckluftverteilersystems, eine Druckluft-Ventileinrichtung aufweisen, welche dazu ausgebildet ist, eine Druckluftversorgung des Hubkolbens, insbesondere der optional mehreren Hubkolben voneinander unabhängig, zu steuern, insbesondere eine jeweilige Strömungsverbindung zwischen einem Hubkolben und dem Druckluftanschluss bedarfsweise abzusperren oder freizugeben. Die Druckluft-Ventileinrichtung kann insbesondere für jede Hubeinheit ein eigenes Druckluftventil aufweisen.

Weiterhin kann es vorteilhaft sein, wenn der Sauggreifer eine Steuereinrichtung, insbesondere Steuerplatine, aufweist, welche dazu ausgebildet ist, die Druckluft-Ventileinrichtung anzusteuern. Der Sauggreifer kann insofern eine eigene, insbesondere autarke, Steuerung aufweisen. Die Steuereinrichtung kann, bspw. über eine drahtlose Verbindung, mit einer übergeordneten Steuereinrichtung, bspw. einer Handhabungsanlage, in welche der Sauggreifer integriert ist, kommunizieren.

Die Druckluft-Ventileinrichtung und/oder die Steuereinrichtung können in oder an dem Greifergrundkörper angeordnet sein. Vorzugsweise sind die Druckluft-Ventileinrichtung und/oder die Steuereinrichtung in dem Greifergrundkörper vorgesehen. Auf diese Weise kann der Sauggreifer in eine Steuerbaugruppe (Druckluft-Ventileinrichtung + optionale Steuereinrichtung) und in eine Greifeinheitenbaugruppe (Greifeinheiten) unterteilt sein. Im Ersatzteilfall können dann beide Baugruppen getrennt voneinander getauscht werden.

Die wenigstens eine Greifeinheit kann derart ausgebildet sein, dass der Hubkolben in die eingefahrene Konfiguration beaufschlagt, insbesondere federbeaufschlagt, ist. Insbesondere kann die wenigstens eine Greifeinheit derart ausgebildet sein, dass der Hubkolben, bspw. durch die vorstehend beschriebene Federbeaufschlagung, bei Wegnahme der Druckbeaufschlagung automatisch in die eingefahrene Passivkonfiguration überführt wird. Insofern kann sich der Hubkolben in einer Ausgangskonfiguration in der eingefahrenen Konfiguration befinden.

Es ist außerdem denkbar, dass der Hubkolben durch einen anliegenden Unterdruck in der ausgefahrenen Konfiguration gehalten wird.

Der Hubkolben einer Greifeinheit ist vorzugsweise in einem Greifeinheitengehäuse der Greifeinheit gelagert. Das Greifeinheitengehäuse kann sich länglich entlang der Hubachse erstrecken, was eine kompakte Anordnung mehrerer Greifeinheiten nebeneinander begünstigt. Das Greifeinheitengehäuse kann zylindrisch ausgebildet sein. Das Greifeinheitengehäuse kann Teil des Greifergrundkörpers sein. Das Greifeinheitengehäuse kann von dem Greifergrundkörper separat bereitgestellt und an dem Greifergrundkörper befestigt sein. Das Greifeinheitengehäuse kann ein- oder mehrteilig ausgebildet sein.

Weiter kann es vorteilhaft sein, wenn zwischen einem der Saugereinrichtung gegenüberliegenden Ende des Hubkolbens und einer Gehäuseinnenwandung des Greifeinheitengehäuse eine Druckkammer, insbesondere Unterdruckkammer, ausgebildet ist, sodass in der Aktivkonfiguration ein Luftpolster hinter dem Hubkolben bereitgestellt ist, welches einen Kollisionsschutz beim Aufsetzen der Saugereinrichtung auf einen Gegenstand bildet. Auf diese Weise können sowohl Gegenstand als auch Saugereinrichtung geschont werden.

Der Hubkolben kann verdrehsicher um die Hubachse gehaltert sein. Beispielsweise ist es denkbar, dass eine Verdrehsicherung über miteinander zusammenwirkende Kreissegmente realisiert ist. Eine solche Verdrehsicherung ist somit nicht klemmend.

Der Greifergrundkörper kann ein- oder mehrteilig ausgebildet sein. Der Greifergrundkörper kann einen Befestigungsabschnitt zur Befestigung an einem Träger, bspw. einer Flanschplatte eines Manipulators, aufweisen.

Der Sauggreifer kann außerdem einen oder mehrere Sensoren umfassen. Beispielsweise können Sensoren zur Überwachung einer Verschiebestellung (eingefahrene Konfiguration / ausgefahrene Konfiguration) des Hubkolbens vorgesehen sein. Alternativ oder zusätzlich kann jeder Saugereinrichtung, insbesondere jeder Saugstelle, ein Sensor zugeordnet sein, über welchen die Saugereinrichtung überwacht werden kann, bspw. hinsichtlich eines Funktionszustands (freie Ansaugen / Ansaugen mit belegter Saugstelle). Beispielsweise kann je Saugereinrichtung oder je Saugstelle ein Drucksensor zur Überwachung eines Ansaugdruckes vorgesehen sein. Es ist auch denkbar, dass in Abhängigkeit eines im Sauggreifer vorherrschenden Unterdrucks eine Geschwindigkeit einer Handhabungsaufgabe selbstständig mittels Haltekraftermittlung angepasst wird. Alternativ oder zusätzlich kann auch wenigstens ein Sensor zur Abstandsüberwachung oder Kollisionswarnung vorgesehen sein. Die Sensoren können mit der optionalen Steuereinrichtung verbunden sein und von dieser ansteuerbar sein.

Es ist denkbar, dass der Sauggreifer nur eine Greifeinheit aufweist. Vorzugsweise ist aber eine Mehrzahl von Greifeinheiten vorgesehen. Dann kann es vorteilhaft sein, wenn die Greifeinheiten derart an dem Greifergrundkörper gehaltert sind, dass die Hubachsen der Greifeinheiten zueinander parallel verlaufen. Auf diese Weise ist eine besonders kompakte Anordnung geschaffen, welche sich besonders für das Greifen von flächenhaft erstreckten Bauteilen wie Blechen eignet.

Vorzugsweise sind die Hubkolben der Greifeinheiten dann voneinander unabhängig betätigbar, d.h. aus- und einfahrbar. Insofern können selektiv einzelne Greifeinheiten aktiviert werden.

Im Rahmen einer vorteilhaften Weiterbildung können mehrere der vorstehend beschriebenen Sauggreifer zu einem übergeordneten Greifmodul zusammengefasst sein. Die Sauggreifer sind vorzugsweise nebeneinander angeordnet und miteinander verbunden. Beispielsweise ist es denkbar, dass die Greifergrundkörper der Sauggreifer miteinander verblockt sind. Die Sauggreifer können voneinander unabhängig ansteuerbar sein. Die Sauggreifer können elektrisch miteinander verbunden sein.

Die vorstehend im Zusammenhang mit dem Sauggreifer als solche beschriebenen Vorteile und optionalen Merkmale können auch zur Ausgestaltung des Greifmodul dienen.

Die Erfindung wird im Folgenden anhand der Figuren näher erläutert. Es zeigen:
Fig. 1 skizzierte Darstellung einer beispielhaften Ausgestaltung eines Sauggreifers mit einer Mehrzahl von Greifeinheiten in einer perspektivischen Ansicht;
Fig. 2 skizzierte Darstellung einer Baugruppe einer Greifeinheit gemäß Figur 1 in einer Schnittansicht;
Fig. 3 skizzierte Darstellung einer beispielhaften Ausgestaltung einer Ventilvorrichtung in einer Schnittansicht;
Fig. 4 Detailansicht der Ventilvorrichtung gemäß Figur 3;
Fig. 5A,B skizzierte Darstellungen einer beispielhaften Ausgestaltung eines Hubkolbens in einer Schnittansicht, bei Hubkolben in Passivkonfiguration (Ansicht A) und in Aktivkonfiguration (Ansicht B);
Fig. 6 skizzierte Darstellung eines Greifmoduls umfassend mehrere Sauggreifer in einer perspektivischen Ansicht; und
Fig. 7 skizzierte Darstellung des Greifmoduls gemäß Fig. 6 in einer Seitenansicht.

In der nachfolgenden Beschreibung sowie in den Figuren sind für identische oder einander entsprechende Merkmale jeweils dieselben Bezugszeichen verwendet.

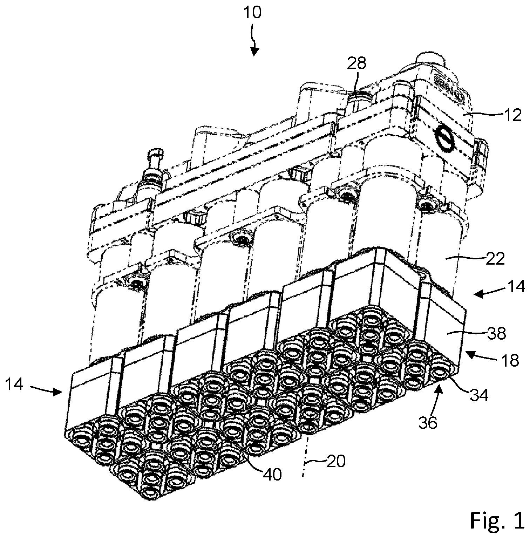

Die Figur 1 zeigt eine beispielhafte Ausgestaltung eines Sauggreifers, welcher insgesamt mit dem Bezugszeichen 10 bezeichnet ist.

Der Sauggreifer 10 umfasst einen Greifergrundkörper 12 und eine Mehrzahl, im Beispiel zwölf, daran angeordneten Greifeinheiten 14. Bei nicht dargestellten Ausgestaltungen können auch mehr oder weniger Greifeinheiten 14 vorgesehen sein.

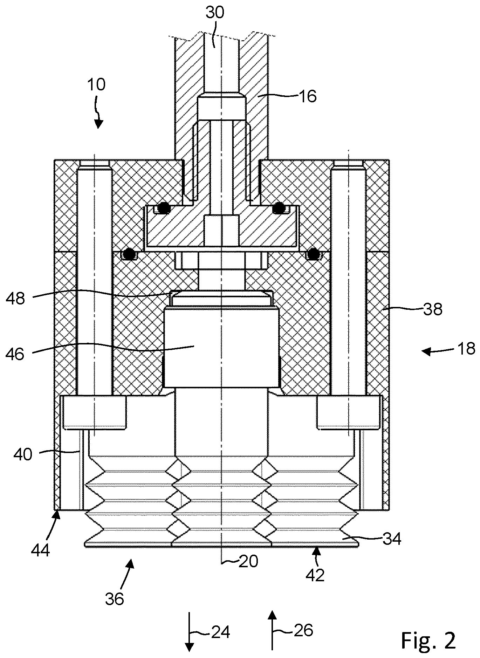

Jede Greifeinheit 14 umfasst einen Hubkolben 16 (vgl. Figur 2, in Figur 1 nicht sichtbar) und eine mit dem Hubkolben 16 bewegungsgekoppelte Saugereinrichtung 18.

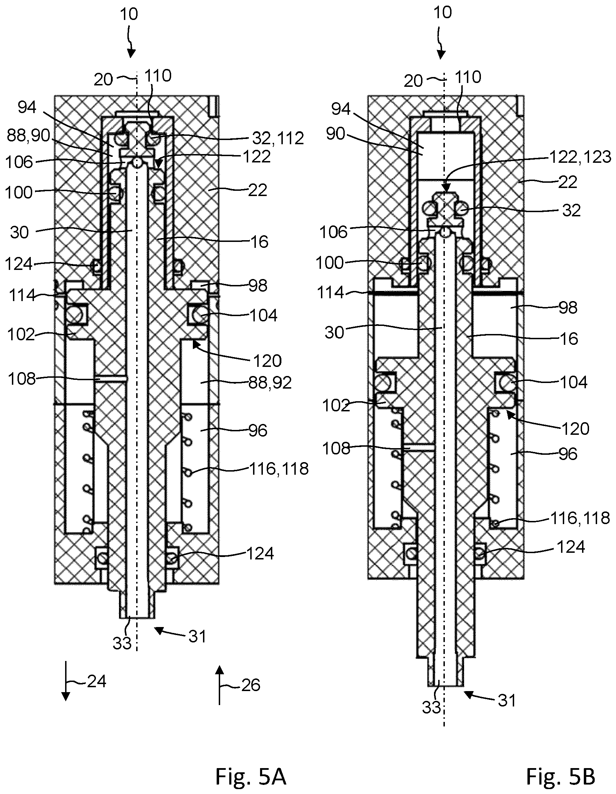

Der Hubkolben 16 ist entlang einer Hubachse 20 zwischen einer axial eingefahrenen Konfiguration (vgl. Figur 5A) und einer axial ausgefahrenen Konfiguration (vgl. Figur 5B) verlagerbar.

Wie nachfolgend noch im Detail unter Bezugnahme auf die Figuren 5A und 5B erläutert, ist der Hubkolben 16 einer jeweiligen Greifeinheit 14 beispielhaft in einem jeweiligen Greifeinheitengehäuse 22 verlagerbar geführt und in einer Ausfahrrichtung 24 und in einer zu der Ausfahrrichtung 24 entgegengesetzten Einfahrrichtung 26 entlang der Hubachse 20 verstellbar.

Zur Versorgung der Saugereinrichtungen 18 mit Unterdruck weist der Sauggreifer 10 außerdem einen Unterdruckanschluss 28 auf, welcher im Beispiel an dem Greifergrundkörper 12 vorgesehen ist. Vorzugsweise ist in dem Greifergrundkörper 12 außerdem ein Unterdruckverteilersystem (in den Figuren nicht sichtbar) zum Verteilen von Unterdruck von dem Unterdruckanschluss 28 auf die einzelnen Greifeinheiten 14 vorgesehen.

Wie in Figur 2 gezeigt, weist jeder Hubkolben 16 einen innenliegenden Unterdruckkanal 30 auf, über welchen die mit ihm verbundene Saugereinrichtung 18 mit Unterdruck versorgbar ist.

Wie nachfolgend noch im Detail beschrieben, wird eine Unterdruckversorgung des Unterdruckkanals 30 und somit eine Unterdruckversorgung der Saugereinrichtung 18 über eine Absperreinrichtung 32 (vgl. Figuren 5A und 5B, in Figur 2 nicht sichtbar) derart gesteuert, dass in der eingefahrenen Konfiguration des Hubkolbens 16 ein Strömungsweg zwischen Unterdruckkanal 30 und Unterdruckanschluss 28 und somit zwischen Saugereinrichtung 18 und Unterdruckanschluss 28, abgesperrt ist (Passivkonfiguration) und in der ausgefahrenen Konfiguration des Hubkolbens 16 dieser Strömungsweg freigegeben ist (Aktivkonfiguration).

In der beispielhaften Konfiguration gemäß Figur 1 weist jede Saugereinrichtung 18 fünf Saugkörper 34 auf, welche jeweils eine Saugstelle 36 zum Ansaugen eines Gegenstands bereitstellen. Die Saugkörper 34 sind vorzugsweise mit dem Unterdruckkanal 30 des Hubkolbens 16 fluidisch parallel geschaltet.

Die Saugkörper 34 sind beispielhaft als Faltenbalgsauger ausgebildet. Die Saugkörper 34 können aber auch beliebige andere Formen aufweisen. Bei der dargestellten

Ausgestaltung sind zudem alle Saugkörper 34 zueinander identisch ausgebildet. Bei nicht dargestellten Ausgestaltungen ist es aber auch denkbar, dass an dem Sauggreifer 10 und/oder an einer jeweiligen Saugereinrichtung 18 unterschiedlich ausgebildete Saugkörpern 34, bspw. Saugkörpern 34 unterschiedlichen Durchmessers, vorgesehen sind.

Die Saugereinrichtungen 18 weisen jeweils ein optionales Gehäuse 38 auf, welches einerseits mit dem Hubkolben 16 verbunden ist und andererseits einen Saugeraufnahmeraum 40 aufweist, in welchem die Saugkörper 34 angeordnet sind (vgl. Figur 2).

Wie aus Figur 2 ersichtlich, stehen die Saugkörper 34 in einer Ausgangskonfiguration, in welcher kein Gegenstand angesaugt ist, mit einer jeweiligen Anlagefläche 42 entlang der Hubachse 20 über eine den Saugeraufnahmeraum 40 begrenzende Wandung 44 des Gehäuses 38 hervor.

Wie vorstehend erwähnt, umfasst jede Greifeinheit 14 außerdem wenigstens eine Ventilvorrichtung 46, welche dazu ausgebildet ist, bei freiem Ansaugen mit unbelegten Saugkörpern 34 selbsttätig zu schließen und somit einen Strömungsweg zwischen den Saugkörpern 34 und dem Unterdruckanschluss 28 zu blockieren.

Im dargestellten Beispiel ist jeder Saugereinrichtung 18 eine einzelne solche Ventilvorrichtung 46 zugeordnet. Die Ventilvorrichtung 46 ist dabei fluidisch in Reihe mit den Saugkörpern 34 geschaltet. Insofern ist den Saugkörpern 34 einer jeweiligen Saugereinrichtung 18 eine gemeinsame Ventilvorrichtung 46 zugeordnet.

Bei nicht dargestellten Ausgestaltungen ist es aber auch denkbar, dass jedem Saugkörper 34 und somit jeder Saugstelle 36 eine eigene Ventilvorrichtung 46 zugeordnet ist.

Im Beispiel ist die Ventilvorrichtung 46 in einem Strömungsweg zwischen den Saugkörpern 34 und dem Unterdruckkanal 30 des Hubkolbens 16 angeordnet. Im Konkreten ist die Ventilvorrichtung 46 in einem sich an den Saugeraufnahmeraum 40 anschließenden Ventilaufnahmeraum 48 des Gehäuses 38 aufgenommen.

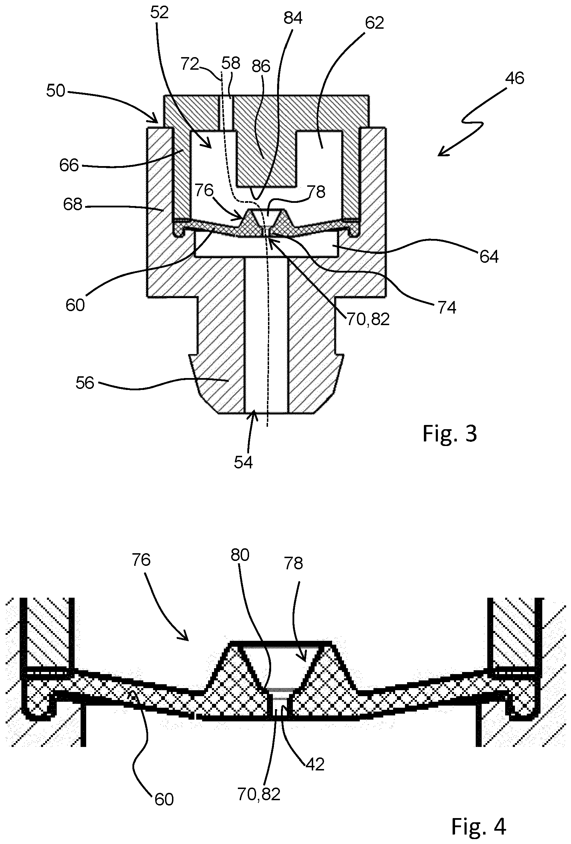

Eine beispielhafte Ausgestaltung einer solchen Ventilvorrichtung 46 wird nachfolgend unter Bezugnahme auf die Figuren 3 und 4 erläutert. Die Erfindung ist aber nicht auf eine solche Ausgestaltung beschränkt.

Wie aus Figur 3 ersichtlich, weist die Ventilvorrichtung 46 ein Ventilgehäuse 50 auf, welches einen Ventilinnenraum 52 einschließt. Das Ventilgehäuse 50 weist einerseits eine Saugöffnung 54 auf, die mit den Saugkörpern 34 strömungsverbunden ist. Optional kann das Ventilgehäuse 50 einen Anschlussabschnitt 56 aufweisen, mittels welchem die Ventilvorrichtung 46 mit der Saugereinrichtung 18, insbesondere einem Saugkörper 34, verbunden werden kann.

Das Ventilgehäuse 50 weist andererseits eine Unterdrucköffnung 58 auf, welche mit dem Unterdruckkanal 30 des Hubkolbens 16 strömungsverbunden ist und über welche somit der Ventilinnenraum 52 mit Unterdruck versorgt werden kann. Im gezeigten Beispiel ist die Unterdrucköffnung 58 als Absaugdurchgang durch das Ventilgehäuse 50 ausgebildet. Eine Position und Ausgestaltung der Unterdrucköffnung 58 können jedoch variieren.

Der Ventilinnenraum 52 wird von einer flexiblen Trennwandung 60 durchspannt. Die flexible Trennwandung 60 trennt in dem Ventilinnenraum 52 einen oben liegenden Steuerraum 62 und einen unten liegenden Saugraum 64 ab.

Eine vorteilhafte Montage kann dadurch erreicht werden, dass das Ventilgehäuse 50 zweieilig aufgebaut ist, mit einem Gehäuseoberteil 66 und einem Gehäuseunterteil 68, die miteinander verbindbar sind. In diesem Fall kann die flexible Trennwandung 60 dadurch in dem Ventilinnenraum 52 befestigt werden, dass die flexible Trennwandung 60 zwischen Gehäuseoberteil 66 und Gehäuseunterteil 68 angeordnet ist, beispielsweise zwischen den beiden Gehäuseteilen 66, 68 eingeklemmt ist.

Der Steuerraum 62 ist über die Unterdrucköffnung 58 mit dem Unterdruckkanal 30 des Hubkolbens 16 und über diesen mit dem Unterdruckanschluss 28 strömungsverbunden. Darüber hinaus ist der Steuerraum 62 über einen in der Trennwandung 60 ausgebildeten Drosseldurchgang 70 mit dem Saugraum 62 verbunden, der sich auf der anderen Seite der flexiblen Trennwandung 60 erstreckt.

Somit ergibt sich durch die Ventilvorrichtung 46 ein Strömungsweg 72, der exemplarisch in der Figur 3 eingezeichnet ist. Der Strömungsweg 72 verläuft von der Saugöffnung 54, durch den Saugraum 64, weiter durch den Drosseldurchgang 70 hindurch in den Steuerraum 62 hinein und zumindest abschnittsweise durch den Steuerraum 62 hindurch, sowie letztendlich durch die Unterdrucköffnung 58 aus dem Steuerraum 62 hinaus.

Der Drosseldurchgang 70 definiert eine Engstelle 74 entlang des Strömungsweges 72 (Figuren 3 und 4). Im Ergebnis weist der Drosseldurchgang 70 einen Strömungswiderstand für Strömungen von dem Saugraum 64 in den Steuerraum 62 auf.

Die flexible Trennwandung 60 weist einen Dichtvorsprung 76 auf, welcher in den Steuerraum 62 hineinragt. Der Dichtvorsprung 76 weist im Beispiel eine Mulde 78 auf, die vorzugsweise konisch oder trichterartig ausgebildet ist. Eine Mündungsöffnung 80 des Drosseldurchgangs 70 mündet in einem Muldenboden der Mulde 78. Der Drosseldurchgang 70 ist im dargestellten Beispiel als Kanal 82 ausgebildet, der durch die flexible Trennwandung 60 hindurch verläuft (in Figur 4 im Detail dargestellt).

In dem Steuerraum 62 ist außerdem ein Dichtsitz 50 bereitgestellt, an welchen der Dichtvorsprung 76 bei Verformung der flexiblen Trennwandung 60 zum Anliegen gebracht werden kann. Im dargestellten Beispiel wird der Dichtsitz 84 von einem in den Steuerraum 62 hervorspringenden Abschnitt 86 des Ventilgehäuses 50 gebildet.

Bei freiem Ansaugen, d.h. bei geöffneter Absperreinrichtung 32 und unbelegten Saugstellen 36, stellt sich aufgrund des an der Unterdrucköffnung 58 anliegenden Unterdruckes eine vergleichsweise starke Strömung von der Saugöffnung 54, durch den Saugraum 64 sowie durch den Drosseldurchgang 70 hindurch in den Steuerraum 62 ein. Die Strömung entlang des Strömungsweges 72 führt dann weiter durch die Unterdrucköffnung 58 zum Unterdruckkanal 30 im Hubkolben 16 und schließlich weiter zu dem Unterdruckanschluss 28. Aufgrund des Strömungswiderstandes im Drosseldurchgang 70 bildet sich in dem Steuerraum 62 gegenüber dem Saugraum 64 ein Unterdruck aus. Dies führt dazu, dass die flexible Trennwandung 60 derart verformt wird, dass das Volumen des Steuerraums 62 verkleinert wird. Dadurch bewegt sich der Dichtvorsprung 76 zu dem Dichtsitz 84 hin und kommt an diesem zum Anliegen. Dies hat zur Folge, dass der Strömungsweg 72 geschlossen ist. Da der Steuerraum 62 weiterhin über die Unterdrucköffnung 58 mit Unterdruck versorgt wird, bleibt der Dichtvorsprung 76 dann in der Position, in welcher er an dem Dichtsitz 84 anliegt (Schließkonfiguration der Ventilvorrichtung). Demgegenüber ist bei Vorliegen der in der Figur 3 gezeigten Freigabekonfiguration der Dichtvorsprung 76 von dem Dichtsitz 84 beabstandet.

Wie in Figur 3 angedeutet, ist die flexible Trennwandung 60 vorzugsweise einstückig mit dem Dichtvorsprung 76 ausgebildet, beispielsweise aus einem homogenen, flexiblen Material (Kunststoff oder Gummi). Bei nicht dargestellten Ausgestaltungen kann der Dichtvorsprung 76 aber bspw. auch durch ein von der Trennwandung 60 separat bereitgestelltes und dann mit der Trennwandung 60 verbundenes Dichtelement bereitgestellt sein.

Im Folgenden wird unter Bezugnahme auf die Figuren 5A und 5B eine beispielhafte Ausgestaltung eines Hubkolbens erläutert. Die Erfindung ist aber nicht auf eine solche Ausgestaltung beschränkt.

Wie aus Figur 5A ersichtlich, ist der Hubkolben 16 in dem bereits erwähnten Greifeinheitengehäuse 22 verschiebbar gelagert. Das Greifeinheitengehäuse erstreckt sich vorzugswese länglich entlang der Hubsachse 20 und begrenzt einen Gehäuseinnenraum 88, in welchem der Hubkolben 16 zumindest abschnittsweise aufgenommen ist. Im konkreten Beispiel weist der Gehäuseinnenraum 88 einen ersten Gehäuseinnenraumabschnitt 90 und einen in Ausfahrrichtung 24 dahinter angeordneten zweiten Gehäuseinnenraumabschnitt 92 auf. Beispielhaft und bevorzugt ist entlang der Hubachse 20 betrachtet eine Querschnittsfläche des ersten Gehäuseinnenraumabschnitts 90 kleiner als eine Querschnittsfläche des zweiten Gehäuseinnenraumabschnitts 94.

Wie in Figur 5A gezeigt, ist der Hubkolben 16 derart ausgebildet, dass der Gehäuseinnenraum 88 in eine erste Unterdruckkammer 94, eine zweite Unterdruckkammer 96 und eine zwischen erster Unterdruckkammer 94 und zweiter Unterdruckkammer 96 angeordnete Überdruckkammer 98 unterteilt ist. Wie bei einem Vergleich der Figuren 5A und 5B ersichtlich, sind die Kammern 94, 96, 98 durch Veränderung einer Verschiebestellung des Hubkolbens 16 entlang der Hubachse 20 in ihrer Größe veränderbar.

Im konkreten Beispiel trennt der Hubkolben 16 mittels einer ersten Dichteinrichtung 100 einen Bereich des ersten Gehäuseinnenraumabschnitts 90 ab, welcher die erste Unterdruckkammer 94 bildet.

In dem zweiten Gehäuseinnenraumabschnitt 92 weist der Hubkolben 16 eine radiale Auskragung 102 auf, welche den zweiten Gehäuseinnenraumabschnitt 92 in die Überdruckkammer 98 und die zweite Unterdruckkammer 96 unterteilt. Zur Abdichtung der Überdruckkammer 98 gegenüber der zweiten Unterdruckkammer 96 ist eine zweite Dichteinrichtung 104 vorgesehen. Beispielhaft ist die zweite Dichteinrichtung 104 in Form eines O-Rings ausgebildet, welcher in einer Nut in der radialen Auskragung 102 angeordnet ist.

Die erste Unterdruckkammer 94 ist mit der zweiten Unterdruckkammer 96 über den vorhin bereits erwähnten Unterdruckkanal 30 in dem Hubkolben 16 strömungsverbunden ist, sodass die zweite Unterdruckkammer 96 über die erste Unterdruckkammer 94 mit Unterdruck versorgbar ist. In der ersten Unterdruckkammer 94 und in der zweiten Unterdruckkammer 96 herrscht insofern insbesondere stets der gleiche Druck. Im konkreten weist der Unterdruckkanal 30 eine Versorgungsöffnung 106 auf, welche in die erste Unterdruckkammer 94 einmündet, und eine, beispielhaft radiale, Unterdrucköffnung 108, welche in die zweite Unterdruckkammer 96 einmündet. Durch die Unterdruckführung 30 kann insofern die Überdruckkammer 98 überbrückt werden.

Der Unterdruckkanal 30 mündet an dem freien Ende 31 des Hubkolbens 16 mit einer Saugöffnung 33 aus, über welche die am freien Ende 31 des Hubkolbens 16 angeordnete Saugereinrichtung 18 mit Unterdruck versorgt werden kann.

Wie in Figur 5B gut ersichtlich, weist die erste Unterdruckkammer 94 eine Kammeröffnung 110 auf, welche mit dem Unterdruckanschluss 28 strömungsverbunden ist und über welche die erste Unterdruckkammer 94 und somit auch die zweite Unterdruckkammer 96 und die Saugereinrichtung 18 mit Unterdruck versorgt werden können.

Der Hubkolben 16 weist an seinem der Saugereinrichtung 18 abgewandten axialen Ende eine dritte Dichteinrichtung 112 auf, welche dazu ausgebildet ist, in der Passivkonfiguration die Kammeröffnung 110 abzudichten und somit eine Unterdruckversorgung der Unterdruckkammern 94, 96 und der Saugereinrichtung 18 zu unterbinden (vgl. Figur 5A) .

Durch Verlagerung des Hubkolbens 16 in Ausfahrrichtung 24 (vgl. Fig. 5B) wird die dritte Dichteinrichtung 112 von der Kammeröffnung 110 abgehoben, sodass Unterdruck in die erste Unterdruckkammer 94 und von dort über den Unterdruckkanal 30 in die zweite Unterdruckkammer 96 und die Saugereinrichtung 18 einströmen kann.

Die dritte Dichteinrichtung 112 bildet insofern eine vorstehend erwähnte Absperreinrichtung 32.

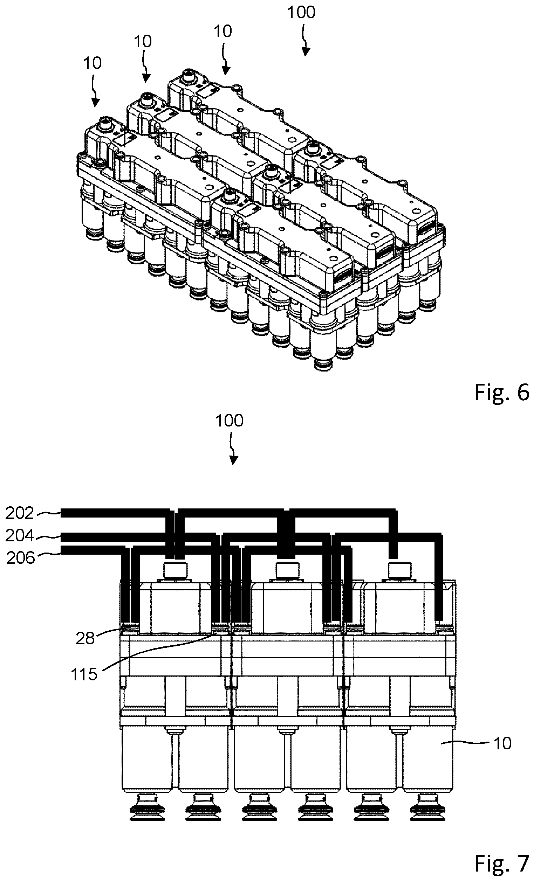

Wie in Figur 5A lediglich schematisch angedeutet, umfasst das Greifeinheitengehäuse 22 im Beispiel außerdem eine optionale Druckluftöffnung 114, über welche die Überdruckkammer 98 mit Druckluft versorgt werden kann. Die Druckluftöffnung 114 kann insbesondere über ein nicht näher dargestelltes Druckluftverteilersystem mit einem Druckluftanschluss 115 (vgl. Figur 7) des Sauggreifers 10 strömungsverbunden sein. Wie vorstehend erwähnt, kann das Druckluftverteilersystem eine Druckluft-Ventileinrichtung zum Steuern einer Druckluftversorgung der Greifeinheiten 14 aufweisen.

Wird die Überdruckkammer 98 mit Druckluft beaufschlagt, wirkt die Druckluft auf den Hubkolben 16, insbesondere die radiale Auskragung 102, sodass eine in Ausfahrrichtung 24 wirkende Kraft auf den Hubkolben 16 ausgeübt wird und der Hubkolben 16 somit in Ausfahrrichtung 24 bewegt wird.

Der Sauggreifer 10 umfasst außerdem eine optionale Federeinrichtung 116, welche dazu ausgebildet ist, den Hubkolben 16 in die Passivkonfiguration (vgl. Figur 5A) zu beaufschlagen. Die Federeinrichtung 116 umfasst beispielhaft eine Druckfeder 118, welche in den Figuren nur abschnittsweise dargestellt ist. Die Druckfeder 118 ist im Beispiel in der zweiten Unterdruckkammer 92 angeordnet und stützt sich mit einem ersten Ende an einer Gehäuseinnenwandung des Gehäuses 22 ab. Mit dem zweiten Ende stützt sich die Druckfeder 118 an der radialen Auskragung 102 ab (in den Figuren ist der Übersichtlichkeit halber lediglich ein Teilabschnitt der Feder 118 gezeigt).

In der in Figur 5A dargestellten Passivkonfiguration (Ausgangskonfiguration) ist der Hubkolben 16 durch die Feder 118 derart in Einfahrrichtung 26 beaufschlagt, dass der Hubkolben 16 mit der dritten Dichteinrichtung 112 die Kammeröffnung 110 abdichtend an dem Gehäuse 22 anliegt. In dieser Konfiguration ist insofern eine Unterdruckzufuhr unterbunden. Wird nun die Überdruckkammer 98 zumindest kurzzeitig mit Überdruck derart beaufschlagt, dass sich der Hubkolben 16 entgegen der Federbeaufschlagung in Ausfahrrichtung 24 bewegt, wird die Kammeröffnung 110 geöffnet, sodass Unterdruck in die erste Unterdruckkammer 94 und in Folge über den Unterdruckkanal 30 in die zweite Unterdruckkammer 96 und die Saugereinrichtung 18 geleitet wird.

Die Unterdruckkammern 94, 96 und der Hubkolben 16 sind dabei vorzugsweise derart bemessen, dass durch den in den Unterdruckkammern 94, 96 dann vorliegenden Unterdruck eine in Ausfahrrichtung 24 wirkende Kraft auf den Hubkolben 16 ausgeübt wird.

Im Beispiel ist dies dadurch realisiert, dass der Hubkolben erste Flächenabschnitte 120 aufweist, welche derart orientiert sind, durch Einwirken des in den Unterdruckkammern 94, 96 vorherrschenden Unterdrucks auf die ersten Flächenabschnitte 120 eine auf den Hubkolben 16 in Ausfahrrichtung 24 wirkende Kraft ausgeübt wird. Im Beispiel sind solche erste Flächenabschnitte 120 beispielsweise durch die axialen Stirnflächen der radialen Auskragung 102 gebildet, welche die zweite Unterdruckkammer 96 begrenzen.

Außerdem sind zweite Flächenabschnitte 122 vorgesehen, welche derart orientiert sind, dass durch Einwirken des in den Unterdruckkammern 94, 96 vorherrschenden Unterdrucks auf die zweiten Flächenabschnitte 122 eine den Hubkolben 16 in Einfahrrichtung 24 wirkende Kraft ausgeübt wird. Im Beispiel sind solche zweite Flächenabschnitte 122 beispielsweise durch die axiale Stirnfläche 123 des Hubkolbens 16 gebildet, welche die erste Unterdruckkammer 94 begrenzen.

Eine Summe aller ersten Flächenabschnitte 120 ist dabei größer als eine Summe aller zweiten Flächenabschnitte 122, sodass netto eine Kraft in Ausfahrrichtung 24 wirkt. Diese Kraft ist insofern einer Kraft infolge der Beaufschlagung mittels Druckluft überlagert.

Um eine Leckage von Unterdruck zu verhindern, sind im Beispiel optionale weitere Dichteinrichtungen 124 vorgesehen, welche den Hubkolben 16 gegenüber dem Gehäuse 22 abdichten.

Wie vorstehend erwähnt, ist es auch denkbar, dass mehrere der vorstehend beschriebenen Sauggreifer 10 zu einem übergeordneten Greifmodul zusammengefasst sind. Eine beispielhafte Ausgestaltung eines solchen Greifmoduls ist in Figur 6 dargestellt und insgesamt mit dem Bezugszeichen 200 versehen. Wie aus Figur 6 ersichtlich, sind die Sauggreifer 10 derart nebeneinander angeordnet, dass die Hubachsen 20 zueinander parallel verlaufen und insbesondere eine ebene Saugfläche gebildet ist. Die Greifergrundkörper 12 der Sauggreifer 10 sind vorzugsweise miteinander mechanisch verbunden.

Wie in Figur 7 schematisch dargestellt, können die Sauggreifer 10 des Greifmoduls 100 auch miteinander fluidisch und/oder elektrisch verbunden sein, bspw. über eine elektrische Versorgungsleitung 202, eine Druckluftversorgungsleitung 204 und/oder eine Unterdruckversorgungsleitung 206.

## Patentansprüche

1. Sauggreifer (10) zum Ansaugen und Handhaben eines Gegenstands, umfassend
- einen Greifergrundkörper (12)
- einen Unterdruckanschluss (28) zum Anschluss an eine Unterdruckversorgung,
- wenigstens eine an dem Greifergrundkörper (12) gehalterte Greifeinheit (14), umfassend einen Hubkolben (16) und eine mit dem Hubkolben (16) bewegungsgekoppelte Saugereinrichtung (18) mit wenigstens einer Saugstelle (36), insbesondere Saugkörper (34), zum Ansaugen eines zu greifenden Gegenstands,
wobei die Saugereinrichtung (18) durch den Hubkolben (16) hindurch mit Unterdruck versorgbar ist,
wobei der Hubkolben (16) entlang einer Hubachse (20) zwischen einer axial eingefahrenen Passivkonfiguration und einer axial ausgefahrenen Aktivkonfiguration verstellbar ist,
wobei die Greifeinheit (14) eine Absperreinrichtung (32) zum Absperren und Freigeben eines Strömungswegs zwischen dem Unterdruckanschluss (28) und der Saugereinrichtung (18) aufweist, wobei die Absperreinrichtung (32) derart ausgebildet ist, dass sie in der Passivkonfiguration des Hubkolbens (16) den Strömungsweg absperrt und in der Aktivkonfiguration des Hubkolbens (16) den Strömungsweg freigibt,
**dadurch gekennzeichnet, dass**
die Greifeinheit (14) wenigstens eine Ventilvorrichtung (46) aufweist, welche in einem Strömungsweg zwischen der wenigstens einen Saugstelle (36) und dem Unterdruckanschluss (28) angeordnet ist und welche dazu ausgebildet ist, bei freiem Ansaugen mit unbelegter wenigstens einer Saugstelle (36) selbsttätig zu schließen und somit den Strömungsweg zwischen der wenigstens einen Saugstelle (36) und dem Unterdruckanschluss (28) zu begrenzen.

2. Sauggreifer (10) nach Anspruch 1, wobei die wenigstens eine Ventilvorrichtung (46) in einem Strömungsweg zwischen der wenigstens einen Saugstelle (36), insbesondere der Saugereinrichtung (18), und dem Hubkolben (16) angeordnet ist.

3. Sauggreifer (10) nach Anspruch 1 oder 2, wobei die Saugereinrichtung (18) eine Mehrzahl von Saugstellen (36), insbesondere Saugkörpern (34), aufweist.

4. Sauggreifer (10) nach dem vorherigen Anspruch, wobei zumindest einer Teilmenge der Saugstellen (36) der Saugereinrichtung (18), vorzugsweise den Saugstellen der Saugereinrichtung (18), eine gemeinsame Ventilvorrichtung (46) zugeordnet ist.

5. Sauggreifer (10) nach Anspruch 3, wobei jeder Saugstelle (46), insbesondere jedem Saugkörper (34), der Saugereinrichtung (18) eine eigene Ventilvorrichtung (46) zugeordnet ist.

6. Sauggreifer (10) nach einem der vorherigen Ansprüche, wobei die Saugereinrichtung (18) wenigstens einen Saugkörper (34) aufweist, welcher eine Saugstelle (36) bereitstellt, wobei die Saugereinrichtung (18) ein Gehäuse (38) aufweist, welches an dem Hubkolben (16) gehaltert ist, wobei das Gehäuse (38) an einer dem Hubkolben (18) abgewandten Seite einen Saugeraufnahmeraum (40) für den wenigstens einen Saugkörper (34) aufweist, wobei das Gehäuse (28) einen, insbesondere zwischen dem Saugeraufnahmeraum (40) und dem Hubkolben (16) angeordneten, Ventilaufnahmeraum (48) aufweist, in welchem die wenigstens eine Ventilvorrichtung (46) angeordnet ist.

7. Sauggreifer (10) nach einem der vorherigen Ansprüche, wobei die Ventilvorrichtung (46) ein Ventilgehäuse (50) mit einem Ventilinnenraum (52) aufweist, in welchem ein Dichtabschnitt (76) und ein Dichtsitz (84) angeordnet sind, wobei Dichtabschnitt (76) und Dichtsitz (84) derart ausgebildet sind, dass bei Anliegen des Dichtabschnitts (76) am Dichtsitz (84) der Strömungsweg zwischen der wenigstens einen Saugstelle (36) und dem Unterdruckanschluss (28) unterbrochen ist, wobei der Dichtabschnitt (76) derart ausgebildet ist, insbesondere im Ventilgehäuse (50) derart verlagerbar ist, dass er bei freiem Ansaugen mit unbelegter wenigstens einer Saugstelle (36) durch den sich einstellenden Ansaugluftstrom in Anlage mit dem Dichtsitz (84) überführt wird.

8. Sauggreifer (10) nach einem der vorherigen Ansprüche, die Ventilvorrichtung (46) umfassend:
- ein Ventilgehäuse (50), welches einen Ventilinnenraum (52) einschließt und welches eine mit dem Unterdruckanschluss (28) strömungsverbundene Unterdrucköffnung (58) und eine mit der wenigstens einen Saugstelle (36) strömungsverbundene Saugöffnung (54) aufweist,
- eine flexible Trennwandung (60), welche derart in dem Ventilinnenraum (52) verläuft, dass einerseits der flexiblen Trennwandung (60) ein Steuerraum (62) in dem Ventilinnenraum (52) definiert ist, und dass andererseits der flexiblen Trennwandung (60) ein Saugraum (64) in dem Ventilinnenraum (52) definiert ist, wobei der Steuerraum (62) mit der Unterdrucköffnung (58) strömungsverbunden ist und wobei der Saugraum (64) mit der Saugöffnung (54) strömungsverbunden ist
wobei die flexible Trennwandung (60) einen Drosseldurchgang (70) derart aufweist, dass ein Strömungsweg (72) von der Saugöffnung (54) durch den Drosseldurchgang (70) in den Steuerraum (62) hinein und weiter von dem Steuerraum (62) durch die Unterdrucköffnung (58) bereitgestellt wird,
wobei der Drosseldurchgang (70) derart ausgebildet ist, dass ein Strömungswiderstand für Strömungen durch den Drosseldurchgang (70) derart definiert ist, dass sich bei freiem Ansaugen mit unbelegter wenigstens einer Saugstelle (36) - aufgrund des Strömungswiderstandes durch den Drosseldurchgang (70) - in dem Steuerraum (62) ein Unterdruck gegenüber dem Saugraum (64) einstellt,
wobei die flexible Trennwandung (60) derart ausgebildet ist, dass sie aufgrund des sich bei freiem Ansaugen in dem Steuerraum (62) einstellenden Unterdrucks verformbar ist, wobei an der Trennwandung (60) ein, insbesondere den Drosseldurchgang (70) umgebender, Dichtabschnitt (76), insbesondere in Form eines in das Innere des Steuerraums (62) hineinragenden Dichtvorsprungs, vorgesehen ist,
wobei innerhalb des Steuerraumes (62) ein zugehöriger Dichtsitz (84) für den Dichtabschnitt (76) vorgesehen ist, wobei Dichtabschnitt (76) und Dichtsitz (84) derart angeordnet sind, dass bei Verformung der flexiblen Trennwandung (60) bei freiem Ansaugen mit unbelegter wenigstens einer Saugstelle (36) der Dichtabschnitt (76) an den Dichtsitz (84) derart zum Anliegen kommt, dass der Strömungsweg (72) zwischen Saugöffnung (54) und Unterdrucköffnung (58) innerhalb des Steuerraums (62) unterbrochen ist.

9. Sauggreifer (10) nach dem vorherigen Anspruch, wobei der Drosseldurchgang (70) als Kanal ausgebildet ist, der sich durch die flexible Trennwandung (60) erstreckt und mit einer Mündungsöffnung (80) in den Steuerraum (62) einmündet, und wobei Dichtabschnitt (76) und Dichtsitz (84) derart angeordnet sind, dass bei Anliegen des Dichtabschnitts (76) an dem Dichtsitz (84) die Mündungsöffnung (80) innerhalb des Steuerraums (62) geschlossen ist.

10. Sauggreifer (10) nach einem der vorherigen Ansprüche, wobei der Hubkolben (16) druckluftbetätigt aus der Passivkonfiguration in die Aktivkonfiguration überführbar ist, wobei der Sauggreifer (10) einen Druckluftanschluss (115) und ein Druckluftverteilersystem zum Leiten der Druckluft zu der wenigstens einen Greifeinheit (14) aufweist, wobei der Sauggreifer (10) außerdem eine, insbesondere in den Greifergrundkörper (12) integrierte, Druckluft-Ventileinrichtung aufweist, welche dazu ausgebildet ist, eine jeweilige Strömungsverbindung zwischen dem Druckluftanschluss (115) und dem wenigstens einen Hubkolben (16), insbesondere voneinander unabhängig, abzusperren oder freizugeben.

11. Sauggreifer (10) nach dem vorherigen Anspruch, wobei eine in oder an dem Greifergrundkörper (12) angeordnete Steuereinrichtung, insbesondere Steuerplatine, vorgesehen ist, welche dazu ausgebildet ist, die Druckluft-Ventileinrichtung anzusteuern.

12. Sauggreifer (10) nach einem der vorherigen Ansprüche, wobei der Hubkolben (16) in die Passivkonfiguration beaufschlagt, insbesondere federbeaufschlagt, ist.

13. Sauggreifer (10) nach einem der vorherigen Ansprüche, wobei eine Mehrzahl von Greifeinheiten (14) vorgesehen ist, wobei die Greifeinheiten (14) derart an dem Greifergrundkörper (12) gehaltert sind, dass die Hubachsen (20) der Greifeinheiten (14) zueinander parallel verlaufen.

14. Greifmodul (200), umfassend eine Mehrzahl von Sauggreifern (10) nach einem der vorherigen Ansprüche, wobei die Sauggreifer (10) miteinander verbunden sind.
